## Europäisches Patentamt
## European Patent Office
## Office européen des brevets

(19)

(11) Numéro de publication : **0 150 886**
**B1**

(12)

# FASCICULE DE BREVET EUROPÉEN

(45) Date de publication du fascicule du brevet :
28.09.88

(51) Int. Cl.⁴ : **H 04 M 1/72**, H 04 M 1/02

(21) Numéro de dépôt : 85200084.3

(22) Date de dépôt : 28.01.85

(54) Système de péritéléphonie pour poste téléphonique et appareils de péritéléphonie.

(30) Priorité : 01.02.84 FR 8401554

(43) Date de publication de la demande :
07.08.85 Bulletin 85/32

(45) Mention de la délivrance du brevet :
28.09.88 Bulletin 88/39

(84) Etats contractants désignés :
DE FR GB SE

(56) Documents cités :
EP-A- 0 018 525
EP-A- 0 074 319
EP-A- 0 100 084
GB-A- 2 095 512
IEEE INTERNATIONAL CONFERENCE ON COMMUNI-
CATIONS, Seattle, Washington, 11-13 juin 1973, pages
50-24 à 50-29, New York, US; E.R. HAFNER et al.: "A
digital loop communication system"

(73) Titulaire : S.A. PHILIPS INDUSTRIELLE ET COMMER-
CIALE
50 Avenue Montaigne
F-75008 Paris (FR)
FR
N.V. Philips' Gloeilampenfabrieken
Groenewoudseweg 1
NL-5621 BA Eindhoven (NL)
DE GB SE

(72) Inventeur : Sanglier, Jean-François
SOCITE CIVILE S.P.I.D. 209, rue de l'Université
F-75007 Paris (FR)

(74) Mandataire : Charpail, François et al
Société Civile S.P.I.D. 209, rue de l'Université
F-75007 Paris (FR)

EP 0 150 886 B1

Jouve, 18, rue St-Denis, 75001 Paris, France

## Description

La présente invention concerne un système de péritéléphonie comportant un poste téléphonique d'abonné connecté à une ligne d'abonné, au moins un appareil de péritéléphonie et des moyens de connexion entre le dit poste et le/les appareil(s) de péritéléphonie pour participer à l'accomplissement des fonctions de système.

Les fonctions de système à accomplir par les moyens de connexion entre un poste téléphonique d'abonné et un appareil de péritéléphonie sont par exemple le transfert des signaux de parole et des signaux d'information, ou encore d'un signal de référence électrique et de fonction d'alimentation en énergie.

Un système tel que décrit dans le paragraphe introductif est connu de part le Brevet Européen n° 0 018 525. Dans ce système connu les moyens de connexion entre le poste téléphonique et l'appareil de péritéléphonie sont constitués d'une ligne à deux conducteurs auxquels les appareils de péritéléphonie sont connectés. La destination des informations de la ligne est déterminée par des données d'adresse qui sont transmises avec ces informations. Dans ce but, chaque appareil de péritéléphonie doit être pourvu avec au moins un circuit d'interface et une unité de traitement.

C'est un objet de la présente invention de fournir un système tel que décrit dans le paragraphe introductif dans lequel l'appareil de péritéléphonie peut avoir une construction plus simple.

Dans ce but, un système de péritéléphonie selon la présente invention est particulièrement remarquable en ce que les moyens de connexion sont en forme de bus comportant plusieurs conducteurs, chaque conducteur étant destiné à une seule fonction de système et chaque fonction de système étant prise en charge par un seul conducteur de bus.

Le fonctionnement d'un bus est bien connu dans l'industrie de l'informatique ; il consiste à transmettre des signaux dans un canal de transmission à plusieurs lignes de telle sorte que chaque signal présent sur une des lignes est exactement répété en n'importe quel point de la dite ligne ; ainsi tous les appareils connectés au bus ont la même vue de l'état de chaque ligne du bus c'est-à-dire de l'état du bus ; bien entendu, pour chaque ligne du bus, chaque appareil connecté peut être émetteur et/ou récepteur de signal.

La connexion, selon l'invention, au moyen d'un bus permet donc de connecter une pluralité d'appareils de péritéléphonie disposant tous des mêmes informations transmises par le bus ; la mise en œuvre, simultanée ou non, du poste téléphonique et des appareils de péritéléphonie connectés au bus pourra donc s'effectuer d'une manière concertée pour éviter les conflits et/ou les fausses manœuvres qui provoqueraient une mauvaise utilisation de la ligne téléphonique.

Dans ce but il convient que le bus transmette les signaux nécessaires et suffisants pour toutes les applications de péritéléphonie.

Que ces applications soient simples ou complexes, le même bus doit pouvoir être utilisé ce qui signifie qu'un même signal transmis par une ligne du bus doit pouvoir être exploité par tous les appareils intéressés par ce signal ; le choix et le nombre des signaux transmis est donc primordial pour que le bus soit indépendant des applications c'est-à-dire le plus universel possible.

A cet effet, le système de péritéléphonie est particulièrement remarquable en ce que le dit poste téléphonique comporte notamment :

— un dispositif de raccordement au réseau téléphonique,

— un dispositif de détection d'appel pour, en cas d'appel provenant du dit réseau, générer un signal de détection d'appel,

— un dispositif d'activation à deux états à savoir état actif et état inactif,

— un dispositif de commande interne à deux états pour commander le dit dispositif d'activation, avec un état décroché pour commander le dit état actif, et un état raccroché pour commander le dit état inactif,

— un dispositif de régulation du courant circulant dans la dite ligne lorsque le dispositif d'activation est à l'état actif,

— un convertisseur 2 fils/4 fils dont d'une part l'entrée est activée par un micro pour envoyer un signal audio sur la dite ligne, et dont d'autre part la sortie active un écouteur, ou haut-parleur, avec un signal audio provenant de la dite ligne, et en ce que ledit bus d'informations comporte six conducteurs :

— un premier conducteur pour transmettre un signal de référence commun à tous les appareils connectés sur le dit bus,

— un deuxième conducteur pour transmettre, à partir du poste téléphonique, un signal indiquant l'état, décroché ou raccroché, du dit dispositif de commande interne à deux états,

— un troisième conducteur pour transmettre, à partir du poste téléphonique, le dit signal audio provenant de la dite ligne,

— un quatrième conducteur pour transmettre, à partir du poste téléphonique, un signal indiquant la détection ou la non-détection d'un appel,

— un cinquième conducteur pour transmettre, en provenance d'au moins un appareil de péritéléphonie, un signal de commande externe de prise de ligne,

— un sixième conducteur pour transmettre, en provenance d'au moins un appareil de péritéléphonie, un signal analogique d'entrée.

Le poste téléphonique a alors, en plus de ses fonctions connues, une fonction d'interface entre la ligne téléphonique et le bus d'information commun à tous les appareils connectés ; à cet effet, selon l'invention, le dit poste téléphonique est particulièrement remarquable en ce qu'il comporte des moyens de connexions pour se connecter au dit bus notamment : un circuit porte OU dont la sortie commande le dit dispositif d'activation et dont une première entrée est connectée au dit dispositif de commande interne à deux états et dont une deuxième entrée est connectée au dit cinquième conducteur du bus pour recevoir un signal de commande externe de prise de ligne, et ainsi activer le dispositif d'activation quelle que soit l'origine, interne et/ou externe, de la commande de prise de ligne.

Ainsi le bus d'informations transmet
— un signal de référence commun
— un signal indiquant l'état accroché/décroché et assimilable à un indicateur de position du combiné habituel lorsqu'on le décroche ou le raccroche sur sa fourche pour commencer ou terminer une communication téléphonique ; dans le cadre de la péritéléphonie, répondeur automatique par exemple, le poste téléphonique peut se trouver en fonctionnement décroché, du fait du répondeur, même si le combiné habituel est en position raccroché ; c'est l'avantage procuré par la dite porte OU que de pouvoir commander la prise de ligne, ou autrement dit décrocher, soit sur ordre du poste téléphonique, soit sur ordre d'un appareil de péritéléphonie.

Le dit bus à six conducteurs connecté à un poste téléphonique comme susdit permet notamment la connexion d'un appareil de péritéléphonie du type répondeur enregistreur.

Pour pouvoir effectuer un appel, il faut que le poste téléphonique comporte un dispositif d'ouverture de boucle pour ouvrir la boucle à la commande d'un signal de commande qui provient généralement d'un circuit de numérotation associé à un cadran, ou un clavier, bien connu dans les postes téléphoniques.

C'est un avantage procuré par l'invention que de pouvoir effectuer la numérotation par ouverture de boucle à la commande d'un signal de commande transmis par un conducteur supplémentaire du bus en provenance d'un appareil de péritéléphonie.

Dans ce cas, il convient de pouvoir inhiber les signaux parasites avec un dispositif connu de sourdine (muting) pour affaiblir les signaux audio, notamment pendant la numérotation ; selon l'invention il est particulièrement intéressant de pouvoir commander le dispositif de sourdine à partir d'un appareil de péritéléphonie et à cet effet il est prévu un conducteur supplémentaire dans le bus pour transmettre ce signal de commande externe de sourdine.

Dans le but de prévoir un bus aussi général que possible, il apparaît qu'une pluralité de conducteurs est nécessaire pour pouvoir y connecter une aussi large variété d'appareils de péritéléphonie que possible, sans pour autant multiplier outrageusement le nombre des conducteurs ; le choix des signaux transmis est donc une caractéristique importante de l'invention qui sera mieux comprise avec la description non limitative suivante qui s'appuie sur les dessins annexés.

La figure 1 représente une version minimale de l'invention.

La figure 2 représente un mode de connexion électrique.

La figure 3 représente une version de l'invention.

La figure 4 représente d'autres conducteurs du bus.

La figure 5 représente tous les conducteurs du bus.

La figure 6 représente un mode de connexion électrique.

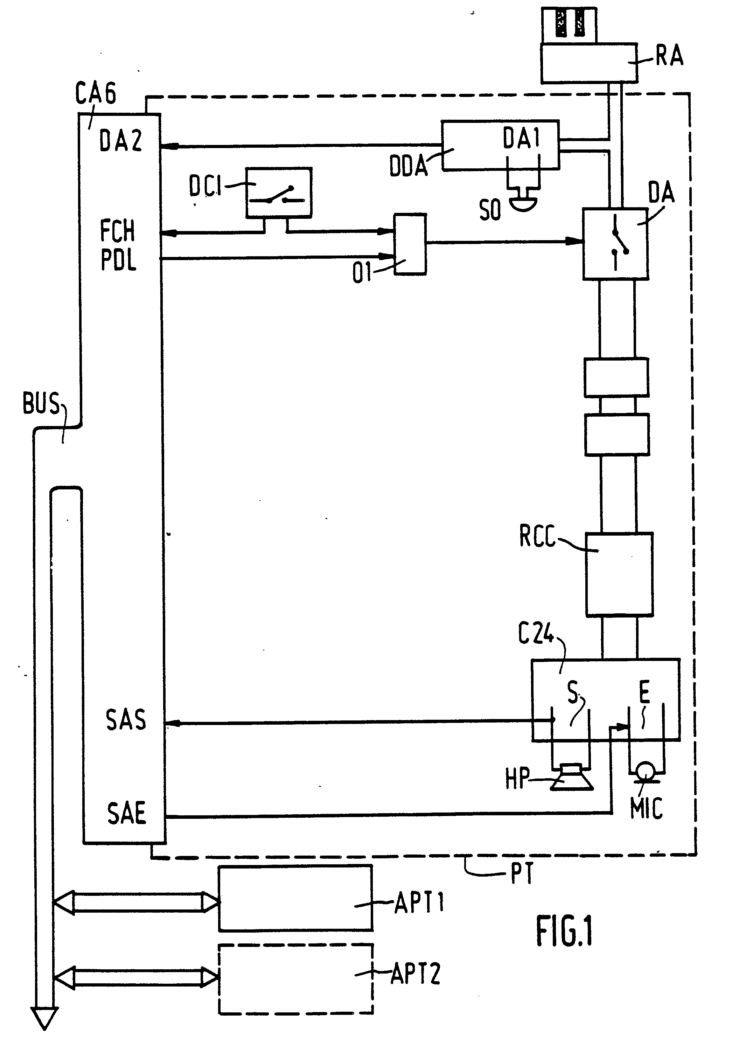

Sur la figure 1 sont représentés schématiquement des appareils de péritéléphonie (APT1, APT2,...) connectés au bus (BUS) auquel est connecté également un poste téléphonique (PT). Le poste téléphonique (PT) est raccordé à une ligne téléphonique par un dispositif de raccordement (RA), par exemple un conjoncteur de modèle courant.

Le poste téléphonique représenté comporte notamment les dispositifs connus suivants :
— un dispositif de détection d'appel (DDA) pour, en cas d'appel, générer un premier signal de détection d'appel (DA1) pour activer, par exemple, une sonnerie (SO),
— un dispositif d'activation (DA) à deux états à savoir un état actif et un état inactif,
— un dispositif de commande interne (DCI) à deux états pour commander le dit dispositif d'activation (DA) avec un état décroché pour commander le dit état actif et un état raccroché pour commander le dit état inactif,
— un dispositif de régulation du courant (RCC) circulant dans la dite ligne lorsque le dispositif d'activation est dans l'état actif,
— un convertisseur 2 fils/4 fils (C24) dont d'une part l'entrée (E) est activée par un micro (MIC) pour envoyer un signal audio sur la dite ligne téléphonique et donc d'autre part la sortie (S) active un écouteur (HP), ou haut-parleur, avec un signal audio provenant de la dite ligne téléphonique.

Comme on peut le constater le poste téléphonique ainsi décrit est un poste minimum qui permet seulement, à lui tout seul, de répondre à un appel ; il ne permet pas d'effectuer un appel puisqu'il ne dispose pas de circuit de numérotation. Dans le cadre de la péritéléphonie ce type de poste peut très bien suffire pour des applications esclaves du genre appareil de péritéléphonie télécommandé.

Pour transmettre la télécommande à de tels appareils de péritéléphonie tout en conservant des sécurités suffisantes, par exemple accusé de réception sonore de la télécommande avec accrochage/décrochage, il est prévu, selon l'invention, un bus minimum à six conducteurs connectés comme suit, dans le poste téléphonique :
— un conducteur pour un signal de référence (REF) non représenté, le signal de référence peut être assimilé à la masse, mais en téléphonie ce n'est généralement pas la terre,
— un conducteur (FCH) pour transmettre, à partir du poste téléphonique, un signal logique indiquant l'état, décroché ou raccroché, du dit dispositif de commande interne (DCI) susdit,

— un conducteur (SAS) pour transmettre, à partir du poste téléphonique le dit signal audio, ou analogique, présent à la sortie (S) du convertisseur 2 fils/4 fils (C24),

— un conducteur (DA2) pour transmettre, à partir du poste téléphonique, un signal logique indiquant la détection ou la non-détection d'appel ; ce signal logique est en général différent, de par sa nature, du dit premier signal de détection d'appel (DA1) mais ces deux signaux ont la même fonction et sont générés par le même dispositif de détection d'appel (DDA) susdit,

— un conducteur (PDL) pour transmettre, en provenance d'un appareil de péritéléphonie, un signal de commande externe de prise de ligne,

— un conducteur (SAE) pour transmettre, en provenance d'un appareil de péritéléphonie, un signal analogique d'entrée à destination de l'entrée (E) du convertisseur 2 fils/4 fils (C24).

Pour assurer la connexion électrique du poste téléphonique avec le bus, un connecteur à au moins 6 broches (CA6), connu et symboliquement représenté, peut être utilisé.

Dans le poste téléphonique lui-même, les connexions sont effectuées avec des moyens connus, câblage ou autre, avec insertion éventuelle de moyens connus de protection et/ou d'isolement du genre résistance, condensateur,... selon la nature, logique ou analogique, des signaux transmis.

Dans le poste téléphonique, il convient notamment, selon l'invention de disposer en outre une porte OU (O1) pour combiner d'une part le signal de commande issu du dit dispositif de commande interne (DCI), et d'autre part le signal de commande externe de prise de ligne issu du conducteur (PDL) du bus, de telle sorte que le dispositif d'activation (DA) soit dans l'état actif, quelle que soit l'origine de la commande de prise de ligne ; cette origine peut être soit interne, état décroché du dispositif de commande interne susdit, soit externe, signal de prise de ligne (PDL) actif en provenance d'un appareil de péritéléphonie.

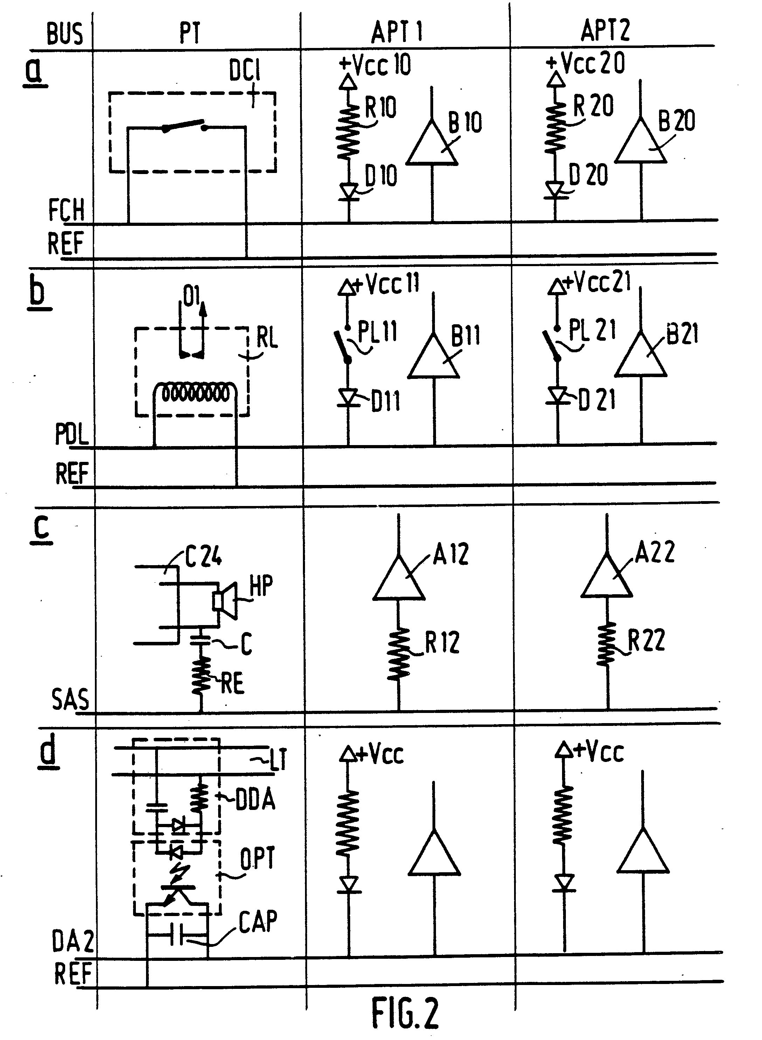

A titre d'exemple non limitatif, sur la figure 2 en forme de tableau, sont représentés des exemples de mode de connexion des conducteurs du bus (BUS) d'une part dans le poste téléphonique (PT) et d'autre part dans les appareils de péritéléphonie (APT1, APT2).

La figure 2a) illustre un mode de connexion du conducteur (FCH) ; le dispositif de commande interne (DCI) est souvent un simple interrupteur, électrique mécanique ou autre, qui, dans l'état accroché ne fournit, ou ne débite, aucune énergie ; pour connaître son état, accroché ou décroché, l'alimentation (VCC 10) de l'appareil de péritéléphonie (APT1) est connectée au conducteur (FCH) via une résistance (R10) et une diode (D10) ; ainsi dans l'état accroché, interrupteur ouvert, le conducteur (FCH) se trouve à la tension de l'alimentation (VCC 10) alors que dans l'état décroché, interrupteur fermé, le conducteur (FCH) se trouve à la tension de référence (REF) ; il suffit alors de tester la tension du conducteur (FCH) au moyen d'un buffer de tension (B10) pour que l'appareil (APT1) connaisse l'état du dispositif de commande interne (DCI) ; la connexion de l'appareil (APT2) est, par exemple, similaire, avec une alimentation (VCC20), une résistance (R20), une diode (D20) et un buffer de tension (B20) ; les tensions (VCC10) et (VCC20) ne sont pas en conflit de par la présence des diodes (D10) et (D20) ; la tension du conducteur (FCH) à l'état accroché sera égale à la plus forte de toutes les tensions (VCC) des appareils de péritéléphonie connectés.

La figure 2b) illustre un mode de connexion du conducteur (PDL) le signal de commande externe de prise de ligne peut être généré dans un quelconque appareil de péritéléphonie par exemple au moyen d'un interrupteur (PL11, PL21) alimenté par une tension (VCC 11, VCC 21 qui peut être la même que VCC 10, VCC 20) et connecté au conducteur (PDL) via une diode (D11, D21) pour éviter les conflits entre les alimentations (VCC) comme susdit ; dans le poste téléphonique, le signal (PDL) pourrait être directement connecté à l'entrée de la susdite porte OU (O1) comme susdit, mais il est préférable, pour des raisons de sécurité, d'introduire une isolation électrique, par exemple comme représenté au moyen d'un relai (RL), entre le poste téléphonique et le bus.

Des buffers de tension (B11, B21) permettent à chaque appareil de péritéléphonie de connaître l'état du conducteur (PDL).

La figure 2c) illustre un mode de connexion du conducteur (SAS) ; à l'intérieur du poste téléphonique il est préférable, entre le haut-parleur (HP) et le bus, d'implémenter une résistance (RE) et un condensateur (C) pour éliminer une éventuelle composante continue du signal analogique sortant du convertisseur 2 fils/4 fils comme susdit ; la réception du signal dans un appareil de péritéléphonie peut s'effectuer par exemple avec une résistance (R12, R22) et un amplificateur (A12, A22) ou tout autre moyen convenable en fonction de la spécificité de chaque appareil de péritéléphonie.

La figure 2d) illustre un mode de connexion du conducteur (DA2) ; le dispositif de détection d'appel (DDA) du poste téléphonique (PT) active, en cas d'appel sur la ligne téléphonique (LT), un opto-coupleur (OPT) ; une capacité (CAP) est branchée entre les connexions de l'opto-coupleur pour filtrer les ondulations du courant similaires aux ondulations de la sonnerie d'appel comme susdit ; l'alimentation de l'opto-coupleur et le test de son état, appel ou non-appel du même genre que la sonnerie intermittente connue, peut s'effectuer, par exemple avec des moyens du même genre que dans la figure 2a) déjà décrite, et tels que représentés sur la figure 2 d).

Les moyens de connexion décrits à titre d'exemple non limitatif dans la figure 2 sont bien connus de l'homme du métier de l'électronique et/ou du téléphone qui aura bien noté que l'invention réside plus dans le principe du bus, qui remplace avantageusement les prises gigognes connues susdites, et dans le choix des signaux transmis dans les conducteurs du bus.

Avec le bus minimum à six conducteurs ci-dessus il est possible de connecter des appareils de péritéléphonie, par exemple, pour des applications du genre télécommande ou télésurveillance comme indiqué dans la revue française déjà citée.

Bien entendu pour d'autres applications plus complexes, il convient d'« enrichir » le bus avec un/des conducteur(s) supplémentaire(s) pour transmettre d'autres signaux.

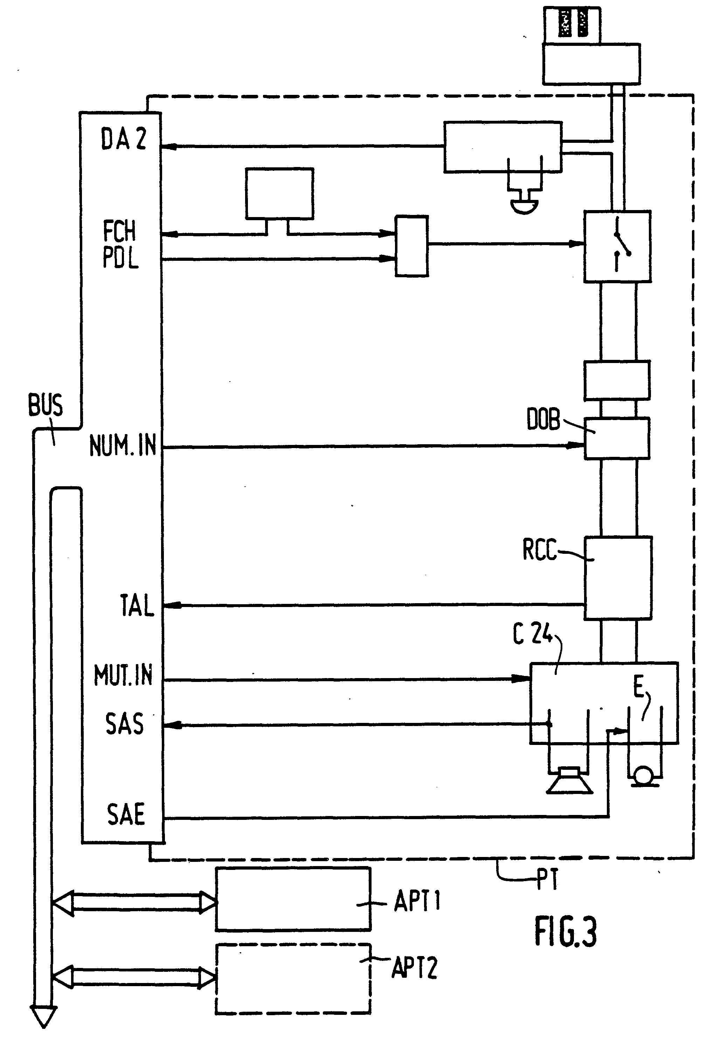

Selon l'invention il est prévu un conducteur supplémentaire (TAL), figure 3, pour transmettre, à partir du poste téléphonique, un courant d'alimentation ; ainsi chaque appareil de péritéléphonie peut disposer d'une alimentation externe ; cette alimentation peut provenir soit de moyens non représentés, piles électriques ou autres, disposés dans le poste téléphonique soit d'un courant de ligne qui est récupéré par le dit dispositif de régulation (RCC), comme représenté, à partir de l'énergie disponible sur la ligne téléphonique. Cette alimentation est notamment intéressante pour la sauvegarde d'informations mémorisées dans une mémoire vive, type RAM, d'un appareil de péritéléphonie.

Selon l'invention, lorsque d'une part le dit poste téléphonique (figure 3) comporte en outre un dispositif d'ouverture de boucle (DOB) pour ouvrir la boucle à la commande d'un signal de commande et d'autre part le dit convertisseur 2 fils/4 fils, comporte en outre une entrée de commande de sourdine (muting) pour inhiber l'entrée (E) audio du convertisseur 2 fils/4 fils, il est prévu que le dit bus comporte en outre deux conducteurs supplémentaires pour transmettre, en provenance d'au moins un appareil de péritéléphonie, respectivement un premier signal de commande (NUM-IN) pour commander le dit dispositif d'ouverture de boucle (DOB) et un deuxième signal de commande dit de sourdine externe (MUT-IN) pour commander la dite sourdine du convertisseur 2 fils/4 fils (C24).

Ainsi avec un appareil de péritéléphonie comportant un circuit de numérotation pour générer un signal de commande de numérotation par ouverture de boucle, il est possible de réaliser des applications d'appel automatique, par exemple appel d'alarme pour personnes âgées ; en effet le bus de connexion permet à un appareil de péritéléphonie, sur commande d'un simple bouton poussoir pour appel urgent, d'effectuer a) la prise de ligne via (PDL), b) l'appel automatique d'un numéro pré-enregistré via (NUM-IN + MUT-IN), c) l'envoi de message SOS pré-enregistré via le conducteur (SAE) ; les opérations a, b, c, étant commandées et contrôlées par un automate, par exemple microprogrammé, de l'appareil de péritéléphonie pour appel d'alarme.

La plupart du temps, mais ce n'est pas une obligation, l'appareil de péritéléphonie positionnera le signal de sourdine (MUT-IN) en position active pendant tout le temps nécessaire à la numérotation (NUM-IN).

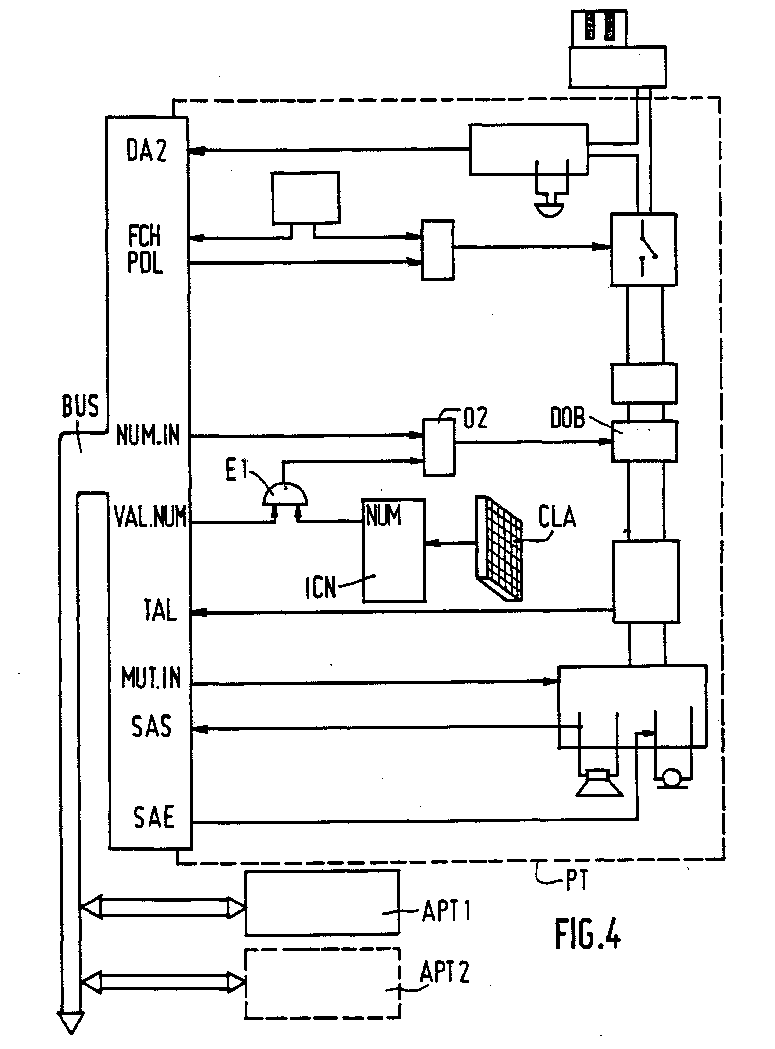

Lorsque le poste téléphonique comporte lui-même un circuit de numérotation (ICN), figure 4, avec un cadran ou un clavier (CLA), le circuit de numérotation (ICN) génère, de manière connue, un signal de commande interne (NUM) d'ouverture de boucle ; dans ce cas, pour pouvoir éviter des numérotations simultanées il convient, selon l'invention, de prévoir un conducteur supplémentaire (VAL-NUM) pour transmettre dans le bus, en provenance d'au moins un appareil de péritéléphonie, un signal de commande pour inhiber la commande interne (NUM) d'ouverture de boucle ; ainsi lorsque le signal (VAL-NUM) est actif, la porte ET (E1) empêche le signal de numérotation interne (NUM) de parvenir jusqu'au circuit porte OU (O2) qui transmet au dispositif d'ouverture de boucle (DOB) soit la commande externe (NUM-IN) soit la commande interne (NUM) lorsque cette dernière n'est pas inhibée par le signal (VAL-NUM) au moyen de la porte ET (E1).

Ainsi un appareil de péritéléphonie connecté au dit bus et comportant un automate de contrôle, par exemple microprogrammé, peut effectuer une numérotation par ouverture de boucle en activant d'une part le conducteur (NUM-IN) et d'autre part, le conducteur (VAL-NUM) pour s'assurer qu'il n'y a pas une autre numérotation simultanée en provenance du poste téléphonique ; bien entendu il aura fallu préalablement, comme susdit, que l'appareil de péritéléphonie effectue la prise de ligne (PDL) et toutes autres opérations fonctionenllement souhaitables et rendues possibles notamment à l'aide des signaux transmis par le bus selon l'invention.

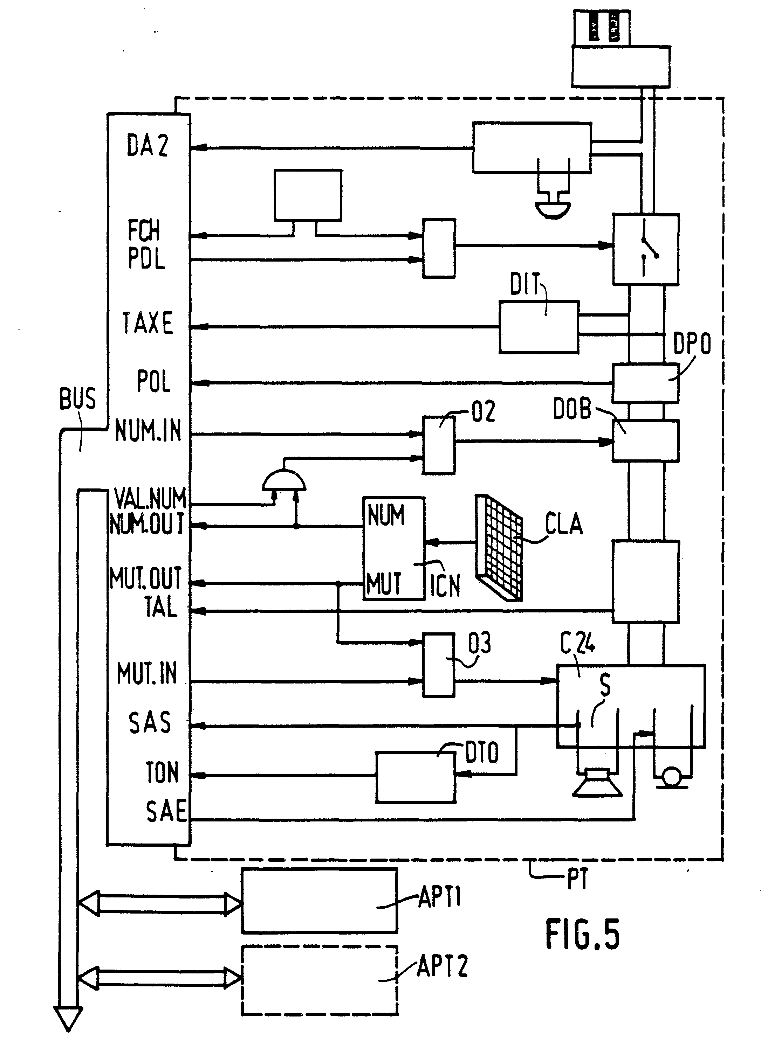

Selon l'invention, il est encore intéressant pour certaines applications de péritéléphonie, de prévoir un conducteur supplémentaire (NUM-OUT), figure 5, pour transmettre, à partir du poste téléphonique le dit signal de commande d'ouverture de boucle (NUM) généré par le circuit de numérotation interne (ICN).

Ainsi un appareil de péritéléphonie connecté au bus, sera en mesure d'observer, pour enregistrement par exemple, les numéros appelés soit par le poste téléphonique (NUM-OUT) soit par un quelconque appareil de péritéléphonie (NUM-IN).

Sur la figure 5, le conducteur (NUM-OUT) est connecté à la sortie (NUM) du circuit de numérotation interne (ICN) ce qui est un mode de réalisation préféré.

Il est possible de le connecter autrement, connexion non représentée, par exemple à l'entrée du dispositif d'ouverture de boucle (DOB) ; si nécessaire, la différenciation entre les numérotations interne et externe est alors réalisable en observant, par exemple, la position du signal (VAL-NUM) ou encore la position du signal (NUM-IN) puisque, dans ce cas, si (NUM-IN) = (NUM-OUT) il s'agit d'une numérotation externe.

Selon l'invention, lorsque le circuit de numérotation interne (ICN) comporte une sortie (MUT), figure 5, de signal de commande de sourdine interne, il est prévu d'une part un conducteur supplémentaire (MUT-OUT) pour transmettre, à partir du poste téléphonique, le dit signal de commande de sourdine interne, et d'autre part un circuit porte OU (O3) dont la sortie est connectée à l'entrée de commande de sourdine du convertisseur 2 fils/4 fils (C24) et dont la première entrée est connectée au conducteur du bus transmettant le dit signal de commande de sourdine externe (MUT-IN) et dont la deuxième entrée est connectée au dit signal de commande de sourdine interne (MUT).

Le dispositif de sourdine est ainsi commandé soit par le circuit de numérotation interne (ICN), soit par une commande (MUT-IN) en provenance d'un appareil de péritéléphonie ; un quelconque appareil de péritéléphonie peut, par exemple, comporter des moyens pour différer une commande de prise de ligne (PDL) et/ou de numérotation (NUM-IN) lorsque le conducteur (MUT-OUT) est actif.

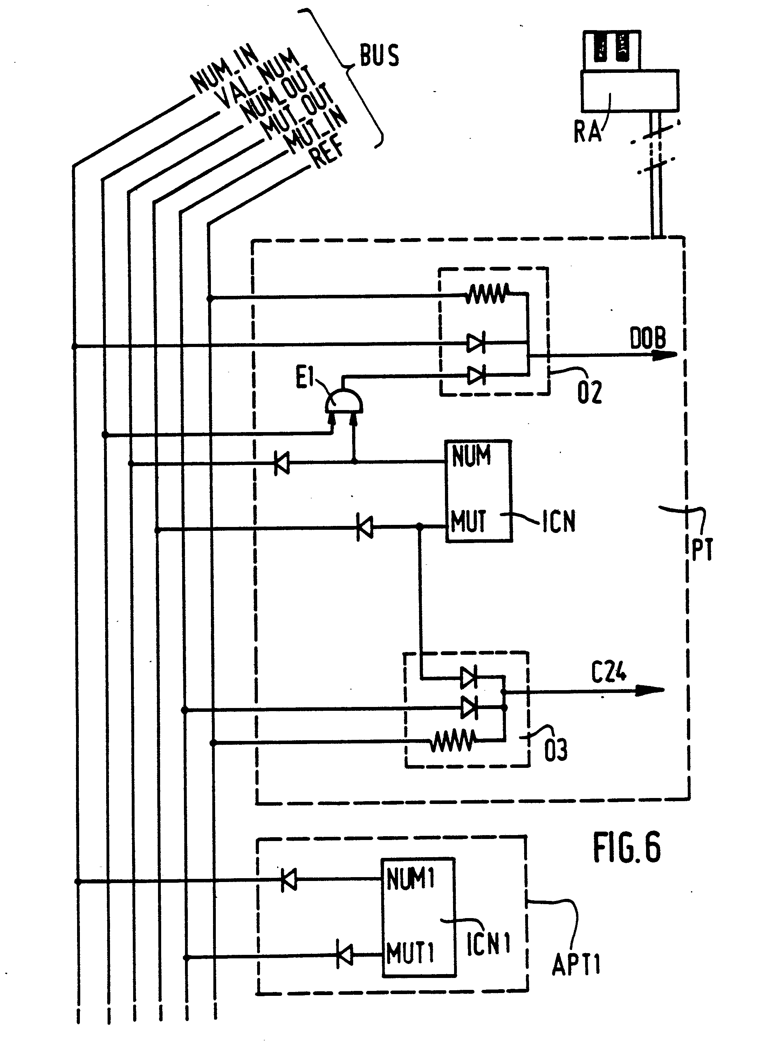

Sur la figure 6 est représenté à titre d'exemple non limitatif, comme pour la figure 2, un exemple de mode de connexion d'une part des éléments déjà décrits, les mêmes repères sont utilisés, dans la figure 5 pour le poste téléphonique (PT) et d'autre part des éléments, ci-après décrits, d'un appareil de péritéléphonie (APT1) avec son propre circuit de numérotation (ICN1) pour émettre un signal de numérotation (NUM1) dans le conducteur (NUM-IN) du bus et pour émettre un signal de commande de sourdine (MUT 1) dans le conducteur (MUT-IN) du bus ; quelques résistances et diodes de sécurité, non référencées mais représentées selon les usages, figurent à titre indicatif et non limitatif.

Pour un appareil de péritéléphonie qui, par exemple, effectue une commande de prise de ligne, il est intéressant, pour lui, de recevoir un « accusé de réception » de cette demande ; à cet effet, il est prévu un conducteur supplémentaire (TON), figure 5, pour transmettre à partir du poste téléphonique un signal indiquant la détection ou la non-détection de tonalité en provenance d'un détecteur de tonalité (DTO) lui-même connecté sur la sortie (S) susdite du convertisseur 2 fils/4 fils (C24) ; un détecteur de tonalité est un appareil qui réagit de manière connue à la fréquence classique de tonalité qui est un son continu, c'est-à-dire non cadencé, à la fréquence de 440 Hz selon les standards habituels.

Il est aussi intéressant de prévoir dans le bus un conducteur supplémentaire (TAXE) pour transmettre, à partir du poste téléphonique, un signal de taxation ce qui est possible lorsque le poste téléphonique comporte un détecteur connu d'impulsion de taxe (DIT) pour générer un signal de taxation.

Il est encore intéressant, lorsque le poste téléphonique comporte un détecteur connu de polarité (DPO) de la ligne téléphonique pour générer un signal de polarité, de prévoir un conducteur supplémentaire (POL) pour transmettre, à partir du poste téléphonique le dit signal de polarité.

La description ci-dessus se réfère explicitement au système de numérotation classique par ouverture de boucle ; un nouveau système de numérotation à fréquence vocale multiple, souvent appelé DTMF, commence à être utilisé, ou utilisable, en téléphonie ; bien entendu une simple transposition des conducteurs du bus concernés permet de suivre cette évolution technologique qui d'ailleurs apporte de nouvelles possibilités de télécommande puisque les touches de numérotation sont alors utilisables, d'une part pour effectuer la numérotation d'appel, mais aussi d'autre part, pendant une communication, pour transmettre, par exemple, des messages codés particulièrement adaptés à la télécommande.

**Revendications**

1. Système de péritéléphonie comportant un poste téléphonique d'abonné connecté à une ligne d'abonné, au moins un appareil de péritéléphonie, et des moyens de connexion entre ledit poste et le/les appareil(s) de péritéléphonie pour réaliser une connexion entre le poste téléphonique et le/les appareil(s) de péritéléphonie, lesdits moyens de connexion étant destinés à participer à l'accomplissement des fonctions du système caractérisé en ce que les moyens de connexion sont en forme de bus comportant plusieurs conducteurs, chaque conducteur étant destiné à une seule fonction de système et chaque fonction de système étant prise en charge par un seul conducteur de bus.

2. Système de péritéléphonie selon la revendication 1, caractérisé en ce que ledit poste téléphonique comporte notamment :

— un dispositif de raccordement au réseau téléphonique ;

— un dispositif de détection d'appel pour, en cas d'appel provenant dudit réseau, générer un signal de détection d'appel ;

— un dispositif d'activation à deux états à savoir état actif et état inactif ;

— un dispositif de commande interne à deux états pour commander ledit dispositif d'activation, avec un état décroché pour commander ledit état actif, et un état raccroché pour commander ledit état inactif ;

— un dispositif de régulation du courant circulant dans ladite ligne lorsque le dispositif d'activation est à l'état actif ;

— un convertisseur 2 fils/4 fils dont d'une part l'entrée est activée par un micro pour envoyer un signal audio sur ladite ligne, et dont d'autre part la sortie active un écouteur, ou haut-parleur, avec un signal audio provenant de ladite ligne
et en ce que ledit bus comporte six conducteurs :

— un premier conducteur pour transmettre un signal de référence commun à tous les appareils connectés sur ledit bus ;

— un deuxième conducteur pour transmettre, à partir du poste, téléphonique, un signal indiquant l'état, décroché ou raccroché, dudit dispositif de commande interne à deux états ;

— un troisième conducteur pour transmettre, à partir du poste téléphonique, ledit signal audio provenant de la dite ligne ;

— un quatrième conducteur pour transmettre, à partir du poste téléphonique, un signal indiquant la détection ou la non-détection d'un appel ;

— un cinquième conducteur pour transmettre, en provenance d'au moins un appareil de péritéléphonie, un signal de commande externe de prise de ligne ;

— un sixième conducteur pour transmettre, en provenance d'au moins un appareil de péritéléphonie, un signal analogique d'entrée et en ce que ledit poste téléphonique comporte en outre d'autres moyens de connexions pour se connecter au dit bus, notamment :

un circuit porte OU dont la sortie commande ledit dispositif d'activation et dont une première entrée est connectée audit dispositif de commande interne à deux états et dont une deuxième entrée est connectée audit cinquième conducteur du bus pour recevoir un signal de commande externe de prise de ligne, et ainsi activer le dispositif d'activation quelle que soit l'origine, interne et/ou externe, de la commande de prise de ligne.

3. Système de péritéléphonie selon la revendication 2 caractérisé en ce que le dit bus comporte en outre un conducteur supplémentaire pour transmettre, à partir du poste téléphonique, un courant d'alimentation.

4. Système de péritéléphonie selon l'une quelconque des revendications 2 ou 3 dans lequel d'une part ledit poste téléphonique comporte en outre un dispositif d'ouverture de boucle pour ouvrir la boucle à la commande d'un signal de commande, et d'autre part ledit convertisseur 2 fils/4 fils, comporte une entrée de commande de sourdine caractérisé en ce que ledit bus comporte en outre deux conducteurs supplémentaires pour transmettre, en provenance d'au moins un appareil de péritéléphonie, respectivement un premier signal de commande pour commander ledit dispositif d'ouverture de boucle et un deuxième signal de commande dit de sourdine externe pour commander ladite sourdine du convertisseur 2 fils/4 fils.

5. Système de péritéléphonie selon la revendication 4, dans lequel ledit poste téléphonique comporte en outre un circuit de numérotation avec un cadran, ou un clavier, pour générer un signal de commande dudit dispositif d'ouverture de boucle caractérisé en ce que ledit bus comporte en outre un conducteur supplémentaire pour transmettre, en provenance d'au moins un appareil de péritéléphonie, un signal de commande d'inhibition dudit circuit de numérotation, et en ce que le poste téléphonique comporte en outre un circuit porte OU dont la sortie commande ledit dispositif d'ouverture de boucle en provenance d'au moins un appareil de péritéléphonie et dont la deuxième entrée est connectée à la sortie d'un circuit porte ET dont la première entrée est connectée audit conducteur du bus porteur dudit signal d'inhibition et dont la deuxième entrée est connectée audit signal de commande du dispositif d'ouverture de boucle généré par ledit circuit de numérotation.

6. Système de péritéléphonie selon la revendication 5 caractérisé en ce que ledit bus comporte un conducteur supplémentaire pour transmettre, à partir du poste téléphonique, ledit signal de commande généré par le circuit de numérotation.

7. Système de péritéléphonie selon l'une quelconque des revendications 5 ou 6, ledit circuit de numérotation comportant en outre une sortie de signal de commande de sourdine interne pour commander ladite sourdine, caractérisé en ce que ledit bus d'information comporte en outre un conducteur supplémentaire pour transmettre, à partir du poste téléphonique, ledit signal de commande de sourdine interne du circuit de numérotation, et en ce que le poste téléphonique comporte en outre un circuit porte OU dont la sortie est connectée à l'entrée de commande de sourdine du convertisseur 2 fils/4 fils et dont la première entrée est connectée au conducteur du bus transmettant ledit signal de commande de sourdine externe et dont la deuxième entrée est connectée audit signal de commande de sourdine interne.

8. Système de péritéléphonie selon l'une quelconque des revendications précédentes, dont le poste téléphonique comporte un détecteur de tonalité, connecté sur la sortie du convertisseur 2 fils/4 fils, pour produire un signal de détection de tonalité, caractérisé en ce que ledit bus comporte en outre un conducteur supplémentaire pour transmettre à partir du poste téléphonique, ledit signal de détection de tonalité.

9. Système de péritéléphonie selon l'une quelconque des revendications précédentes, dont le poste téléphonique comporte un détecteur d'impulsion de taxe pour générer un signal de taxation, caractérisé en ce que ledit bus comporte en outre un conducteur pour transmettre, à partir du poste téléphonique, ledit signal de taxation.

10. Système de péritéléphonie selon l'une quelconque des revendications précédentes, dont le poste téléphonique comporte un détecteur de polarité de la ligne téléphonique pour générer un signal de polarité caractérisé en ce que ledit bus comporte en outre un conducteur supplémentaire pour transmettre, à partir du poste téléphonique, ledit signal de polarité.

11. Système de péritéléphonie selon l'une quelconque des revendications précédentes caractérisé en ce que chaque appareil est connecté au bus au moyen de connecteurs, ou prises, mâles et/ou femelles comportant un nombre de broches au moins égal au nombre de conducteurs dudit bus.

**Claims**

1. A peripheral telephone system, comprising a telephone station connected to a subscriber line, at least one peripheral apparatus and connecting means between said station and the peripheral apparatus(es) for accomplishing a connection between the said station and the said peripheral apparatus, the said connecting means being intended for assisting the executing of functions of the system, characterized in that the connecting means are in the form of a bus comprising a plurality of conductors, each conductor being intended for only one function of the system and each function of the system being performed by one specific conductor of the bus.

2. A peripheral telephone system as claimed in Claim 1, characterized in that said telephone station especially comprises :
— a device for connection to the telephone network,
— a call detector for generating a call detection signal when a call comes in from said network,
— a two-state energizing device, that is to say, having an active state and an inactive state,
— an internal two-state control device for controlling said energizing device, having an off-hook state for controlling the active state and an on-hook state for controlling the inactive state,
— a current regulating device for the current circulating in said line when the energizing device is in the active state,
— a 2-wire/4-wire converter which when the input is activated by a microprocessor sends an audio signal over said line, and the output energizes and earphone or loudspeaker in response to an audio signal received from said line,
and in that said bus comprises six conductors :
— a first conductor for transmitting a reference signal which is common to all the apparatuses connected to said bus,
— a second conductor for transmitting, from the telephone station a signal indicating the off-hook or the on-hook state of said internal two-state control arrangement,
— a third conductor for transmitting, from the telephone station, said audio signal coming from said line,
— a fourth conductor for transmitting, from the telephone station, a signal indicating whether a call is detected or not detected,
— a fifth conductor for transmitting an external line seizure control signal from at least one peripheral apparatus,
— a sixth conductor for transmitting an analog input signal from at least one peripheral apparatus :
and in that said telephone station comprises inter alia further connecting means for connecting to said bus, more specifically :
an OR-gate circuit whose output controls said energizing device and whose first input is connected to said internal two-state control device and whose second unput is connected to said fifth conductor of the bus for receiving an external line seizure control signal, and thus energizes the energizing device depending on the origin, internal and/or external of the line seizure control signal.

3. A peripheral telephone system as claimed in Claim 2, characterized in that the bus comprises inter alia an additional conductor for transmitting a supply current from the telephone station.

4. A peripheral telephone system as claimed in one of the Claims 2 or 3 in which on the one hand said telephone station comprises inter alia a loop opening arrangement for opening the loop under the control of a control signal, and on the other hand said 2-wire/4-wire converter has a muting control input, characterized in that said bus comprises inter alia two additional conductors for transmitting a first control signal received from at least one peripheral apparatus, for controlling said loop-opening arrangement and a second external muting control signal for controlling muting of the 2-wire/4-wire converter.

5. A peripheral telephone system as claimed in Claim 4 in which the telephone station comprises inter alia a dialling circuit including a dial, or a keyboard for generating a control signal for the loop opening arrangement, characterized in that the bus comprises inter alia an additional conductor for transmitting a disabling control signal received from at least one peripheral apparatus, for the dialling circuit and that telephone station comprises inter alia an OR-gate circuit whose output controls the loop opening arrangement and whose first input is connected to said conductor of the bus which carries a loop opening control signal received from at least one peripheral apparatus and whose second input is connected to the output of an AND-gate circuit whose first input is connected to the conductor of the bus carrying this disabling signal and the second input of which is connected to the control signal of the loop opening arrangement, which signal is generated by the dialling circuit.

6. A peripheral telephone system as claimed in Claim 5, characterized in that this bus comprises an additional conductor for transmitting from the telephone station the control signal generated by the dialling circuit.

7. A peripheral telephone system as claimed in one of the Claims 5 or 6, the dialling circuit comprising inter alia an internal muting control signal output for controlling said muting operation, characterized in that the information bus comprises inter alia an additional conductor for transmitting the internal muting control signal of the dialling circuit from the telephone station, and that the telephone station comprises inter alia an OR-gae circuit whose output is connected to the muting control input of the 2-wire/4-wire converter and whose first input is connected to the conductor of the bus transmitting this external muting control signal and whose second output is connected to the internal muting control signal.

8. A peripheral telephone system as claimed in any of the preceding Claims the telephone station of which comprises a ringing detector connected to the output of the 2-wire/4-wire converter, for producing a ringing detection signal, characterized in that this bus comprises inter alia an additional conductor for transmitting this ringing detection signal from the telephone station.

9. A peripheral telephone system as claimed in any one of the preceding Claims, whose telephone station comprises a metering pulse detector for generating a metering signal, characterized in that this bus comprises inter alia a conductor for transmitting said metering signal from the telephone station.

10. A peripheral telephone system as claimed in any one of the preceding Claims, whose telephone station comprises a telephone line polarity detector for generating a polarity signal, characterized in that this bus comprises inter alia an additional conductor for transmitting said polarity signal from the telephone station.

11. A peripheral telephone system as claimed in any one of the preceding Claims, characterized in that each apparatus is connected to the bus via connectors, or terminals, male and/or female having a number of pins at least equal to the number of conductors of this bus.

**Patentansprüche**

1. Perifernsprechsystem mit einer an eine Teilnehmerleitung angeschlossenen Teilnehmerstelle, mindestens einem Perifernsprechapparat und mit Verbindungsmitteln zwischen der Teilnehmerstelle und dem/den Perifernsprechapparat(en) zum Herstellen einer Verbindung zwischen der Teilnehmerstelle und dem/den Perifernsprechapparat(en), wobei diese Verbindungsmittel dazu dienen, die Funktionen des Systems durchzuführen, dadurch gekennzeichnet, dass die Verbindungsmittel in Form eines Busses mit mehreren Leitern sind, wobei jeder Leiter für nur eine Funktion des Systems vorgesehen ist und jede Funktion des Systems durch nur einen einzigen Leiter des Busses durchgeführt wird.

2. Perifernsprechsystem nach Anspruch 1, dadurch gekenzeichnet, dass die Teilnehmerstelle ins besondere die folgenden Elemente aufweist :
— eine Verbindungsanordnung für das Fernsprechnetz,
— eine Anrufdetektionsanordnung zum im Falle eines Anrufes von dem Netzwerk Erzeugen eines Anrufdetektionssignals,
— eine Zweizustände-Aktivierungsanordnung mit einem aktiven und einem nicht-aktiven Zustand,
— eine Zweizustände-Innensteueranordnung zum Steuern der Aktivierungsanordnung mit einem eingeschalteten Zustand zum Steuern des aktiven Zustandes und mit einem ausgeschalteten Zustand zum Steuern des nicht-aktiven Zustandes,
— eine Stromregelanordnung für den durch die Leitungs fliessenden Strom, wenn die Aktivierungsanordnung sich in dem aktiven Zustand befindet,
— einen 2-Draht/4-Draht-Wandler, von dem einerseits der Eingang durch ein Mikrophon aktiviert wird zum Senden eines Tonsignals über die Leitung und von dem andererseits der Ausgang einen Hörer oder einen Lautsprecher aktiviert und zwar mit Hilfe eines Tonsignals aus der Leitung und
dass der genannte Bus sechs Leiter aufweist :
— einen ersten Leiter zum Übertragen eines allen an den Bus angeschlossenen Apparaten gemeinsamen Bezugssignals ;
— einen zweiten Leiter zum von der Teilnehmerstelle aus Übertragen eines den Zustand der Zweizustände-Innensteueranordnung, d.h. eingeschaltet oder ausgeschaltet angebenden Signals,
— einen dritten Leiter zum von der Teilnehmerstelle aus Übertragen des Tonsignals von der Leitung,
— einen vierten Leiter zum von der Teilnehmerstelle aus Übertragen eines Signals, das angibt, ob ein Anrufsignal detektiert oder nicht detektiert wurde,
— einen fünften Leiter zum Übertragen eines von mindestens einem Perifernsprechapparat herrührenden Leitungsklemmen-Aussensteuersignals,
— einen sechsten Leiter zum Übertragen eines von mindestens einem Perifernsprechapparat herührenden analogen Eingangssignals,
und dass diese Teilnehmerstelle ausserdem andere Verbindungsmittel aufweist um sie mit dem Bus zu verbinden und zwar :
eine ODER-Torschaltung, deren Ausgang die Aktivierungsanordnung steuert und von der ein erster Eingang mit der Zweizustände-Innensteueranordnung verbunden ist und ein zweiter Eingang mit dem fünften Leiter des Busses verbunden ist zum Erhalten eines Leitungsklemmen-Aussensteuersignals und zum Aktivieren der Aktivierungsanordnung unabhängig von der Frage, woher, von drinnen und/oder von draussen, die Steuerung der Leitungsklemme herrührt.

3. Perifernsprechsystem nach Anspruch 2, dadurch gekennzeichnet, dass der Bus ausserdem einen zusätzlichen Leiter aufweist zum von der Teilnehmerstelle aus Übertragen eines Speisestromes.

4. Perifernsprechsystem nach einem der Ansprüche 2 oder 3, in dem einerseits die Teilnehmerstelle ausserdem eine Schleifenöffnungsanordnung aufweist zum unter Ansteuerung eines Steuersignals Öffnen der Schleife und andererseits der 2-Draht/4-Draht-Wandler einen Dämpfungssteuereingang aufweist, dadurch gekennzeichnet, dass der Bus ausserdem zwei zusätzliche Leiter aufweist zum von mindestens einem Perifernsprechapparat asgehend Übertragen eines ersten Steuersignals zum Steuern der Schleifenöffnungsanordnung und ein zweites Steuersignal, das als Aussendämpfungssignal bezeichnet wird, zum Steuern der Dämpfung des 2-Draht/4-Draht-Wandlers.

5. Perifernsprechsystem nach Anspruch 4, in dem die Teilnehmerstelle ausserdem eine Wahlschaltung aufweist mit einer Wahlscheibe oder einer Wahltastatur zum Erzeugen eines Steuersignals für die Schleifenöffnungsanordnung, dadurch gekennzeichnet, dass der Bus ausserdem einen zusätzlichen Leiter aufweist zum ausgehend von mindestens einem Perifernsprechapparat Übertragen eines Steuersignals zum Sperren der Wahlschaltung und dass die Teilnehmerstelle ausserdem eine ODER-Torschaltung aufweist, dren Ausgang die Schleifenöffnungsanordnung steuert und von der der erste Eingang mit dem Leiter des Busses verbunden ist, der ein von mindestens einem Perifernsprechapparat herrührendes Steuersignal zum Öffnen der Schleife trägt und von der der zweite Eingang mit dem Ausgang einer UND-Torschaltung verbunden ist, von der der erste Eingang mit dem Leiter des Busses verbunden ist, der das Sperrsignal trägt und von der der zweite Eingang mit dem von der Wahlschaltung erzeugten Steuersignal der Schleifenöffnungsanordnung verbunden ist.

6. Perifernsprechsystem nach Anspruch 5, dadurch gekennzeichnet, dass der Bus einen zusätzlichen Leiter aufweist zum von der Teilnehmerstelle Übertragen des von der Wahlschaltung erzeugten Steuersignals.

7. Perifernsprechsystem nach einem der Ansprüche 5 oder 6, wobei die Wahlschaltung ausserdem einen Innendämpfungssteuersignalausgang zum Steuern der Dämpfung aufweist, dadurch gekennzeichnet, dass der Datenbus ausserdem einen zusätzlichen Leiter aufweist zum von der Teilnehmerstelle Übertragen des von der Wahlschaltung erzeugten Innendämpfungssignals und dass die Teilnehmerstelle ausserdem eine ODER-Torschaltung aufweist, deren Ausgang mit dem Dämpfungssteuereingang des 2-Draht/4-Draht-Wandlers verbunden ist und deren erster Eingang mit demjenigen Leiter des Busses verbunden ist, der das Aussendämpfungssteuersignal verbunden ist.

8. Perifernsprechsystem nach einem der vorstehenden Ansprüche, wobei dei Teilnehmerstelle einen mit dem Ausgang des 2-Draht/4-Draht-Wandlers verbundenen Tondetektor zum Erzeugen eines Tondetektionssignals aufweist, dadurch gekennzeichnet, dass der Bus ausserdem einen zusätzlich Leiter aufweist zum von der Teilnehmerstelle Übertragen des Tondetektionssignals.

9. Perifernsprechsystem nach einem der vorstehenden Ansprüche, wobei die Teilnehmerstelle einen Zählimpulsdetektor aufweist zum Liefern eines Zählsignals, dadurch gekennzeichnet, dass der genannte Bus ausserdem einen Leiter aufweist zum von der Teilnehmerstelle Übertragen des Zählsignals.

10. Perifernsprechsystem nach einem der vorstehenden Ansprüche, wobei die Teilnehmerstelle einen Fernsprechleitungspolaritätsdetektor aufweist zum Liefern eines Polaritätssignals, dadurch gekennzeichnet, dass der Bus ausserdem einen zusätzlichen Leiter aufweist zum von der Teilnehmerstelle Übertragen des Polaritätssignals.

11. Perifernsprechsystem nach einem der vorstehenden Ansprüche, dadurch gekennzeichnet, dass jeder Apparat mittels Leiter oder männlicher und/oder weiblicher Stecker mit einer der Anzahl Leiter des Busses wenigstens entsprechenden Anzahl Stifte mit dem Bus verbunden ist.

0 150 886

FIG.1

FIG.2

FIG.3

**0 150 886**

FIG.4

FIG.5

0 150 886

FIG.6